**Europäisches Patentamt**

**European Patent Office**

**Office européen des brevets**

(19)

(11) Publication number: **0 033 573**

**A1**

(12) # EUROPEAN PATENT APPLICATION

(21) Application number: **81200110.5**

(22) Date of filing: **30.01.81**

(51) Int. Cl.³: **H 04 M 15/28**

(30) Priority: **01.02.80 SE 8000797**

(43) Date of publication of application
**12.08.81 Bulletin 81/32**

(84) Designated Contracting States:
**AT BE CH DE FR IT LI**

(71) Applicant: **Dag Bille Svensk Idéutveckling AB**
**Gäsevadholm Pl. 7240**
**S-434 00 Kungsbacka(SE)**

(72) Inventor: **Bille, Dag**
**Gasevadholm, Pl. 7240**
**S-434 00 Kungsbacka(SE)**

(74) Representative: **Roth, Michel et al.**
**GÖTEBORGS PATENTBYRA AB Box 5005**
**S-402 21 Göteborg(SE)**

(54) **An electronic telephone call debiting meter for a subscriber's telephone set.**

(57) The invention refers to an electronic debiting call meter (1) preferably intended for a subscriber's telephone set (3). The debiting call meter (1) comprises an inductive detector (2) and a calculating/presentation unit (4) and is preferably placed beneath the telephone set (3) for facilitating the inductive coupling. When the subscriber lifts the receiver for making a call the debiting call meter (1) is switched on by means of a control member (84) which switches on the voltage to the debiting call meter (1) and resets the electronics. The charge pulses, which during the call are transferred on the telephone network from the telephone station to the subscriber's telephone (3), are detected by the detector (2), which delivers a signal to the calculating/presentation unit (4) for each marking signal. This signal causes that an optional preset marking rate is added to an accumulator arranged in the debiting call meter (1). The content of the accumulator is detected and presented on an indicator (10), which e.g. can be a LCD-display. The subscriber can then continuously read the accumulated cost during the call.

FIG. 1

EP 0 033 573 A1

## An electronic telephone call debiting meter for a subscriber's telephone set

When a person is using the telephone, particularly for inland trunk calls or international calls, it is very difficult for the subscriber to estimate the cost of the telephone call without careful control. Many subscribers wish to keep the telephone bill as low as possible. For this reason it is desirable to obtain continuous information concerning the cost of a call in progress.

Also in those cases when the cost of the telephone calls are going to be debited at once, such as at business line public telephone boxes or the like, it is naturally important that relevant information about every telephone call can be achieved.

A known method today for monitoring the cost of a call is to connect an electromechanical call meter to the telephone network, and place the call meter at the telephone set. By means of this meter a continuous information of the number of used period counting impulses is obtained. A drawback to this method is that the actual cost of the call can only be obtained by multiplying the number of used charge impulses by the present telephone call rate. Another drawback is that the call meter, which is mainly an electromechanical unit, requires quite a large space and cannot be placed beside a telephone device without being in the way physically or aesthetically.

Electronic call meters have recent been presented on the market. These known meters however have essentially the same disadvantages as the above mentioned electromechanical meters such as e.g. a comparatively bulky casing. It is furthermore still also necessary to convert the number of used period counting impulses to a call cost.

Devices for automatically converting detected period counting impulses to a call cost have been disclosed in a number of patent publications. These devices are however mainly intended for telephone networks in which the charge impulses are transmitted as a superposed signal of a certain frequency in one of the telephone conductors.

For all devices intended to be connected to the public telephone network must comply with a number of technical demands stated in rules issued by authorities in the country respectively. For instance it is usual that the electric or electronic circuits must not load the telephone network in an incorrect manner as this may lead to malfunctions on the telephone network. The electric or electronic components must therefore as far as possible be electrically isolated from the telephone network.

One requirement is that the call debiting meter should be designed as small as possible to allow it to be easily placed in different environments for example beneath the telephone device. When the cost for each chargepulse is altered now and than it is also necessary that the subscriber can easily change the charge rate on the call
debiting meter to obtain a relevant call cost. It is also an
advantage if the call debiting meter must not be connected
to the main network at one hand from interference aspects
and on the other hand in order to allow the call debiting
meter to be easily moved together with the telephone device.
Dangerous voltages must if possible be avoided in the
electronic circuits. It is therefore favorable if the call
debiting meter only is fed from batteries which demands
essentially smaller volyme than a network connected device.

The purose of the invention is to present a debiting call
meter intended for subscribers telephone sets which call
meters must be easy to connect to the public telephone
network on which supplied chargepulses should be detected
and transferred to a value expressed in monetary units, for
example to the swedish units "kronor" and "ören". The
debiting call meter must also be easy to handle and read.
Another purpose is that the call meter should be dependable
and not need much power and also not load the telephone
network in an irrcorrect manner. This is achieved by that
the debiting meter is arranged to detect inductively charge
pulses supplied on the telephone network and that the
calculation/presentation unit is arranged to accumulate on
an alteration switch a pre-set cost valve to a decade
counter/accumulator for each charge pulse and that a driver
is arranged to detect the contents of the decade counter/-
accumulator, transform it to a digit-code and transfer the
digit-code to the indicator at which the indicator is
arranged to indicate the accumulated cost of the telephone
call in monetary units.

The invention will hereinafter be further described with
reference to an embodiment shown in the accor panying
drawings, in which:
Figure 1 shows a block diagram of a call debiting meter;
Figure 2 shows circuit diagram of the call debiting meter;
Figure 3 shows a circuit diagram of a calculation and
presentation unit,and
Figure 4 shows a view of the debiting call meter located
beneath a telephone set.

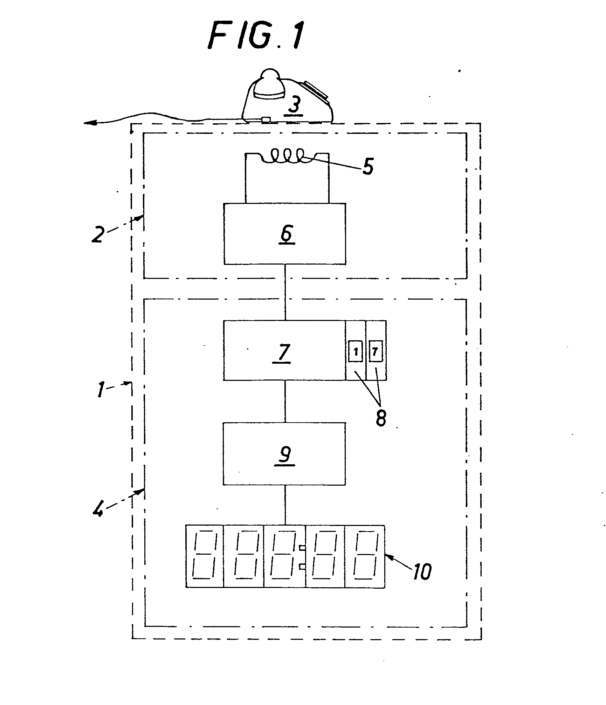

Figure 1 shows a block diagram of the basic design of the
call debiting meter 1. It here consists of two parts, i.e. a
call detector 2, which is connected to the subscribers
telephone set 3, preferably beneath the set, and a
calculation/presentation unit 4 which communicates with the
call detector 2. The call detector 2 comprises of one coil 5
and of one decoder 6. The calculation/presentation unit 4
consists of a calculator 7 having a debiting switch 8, a
driver circuit 9 and an indicator 10 e.g. a liquid crystal
display (LCD). All electronic circuits are driven by a
battery unit which is not shown in Figure 1.

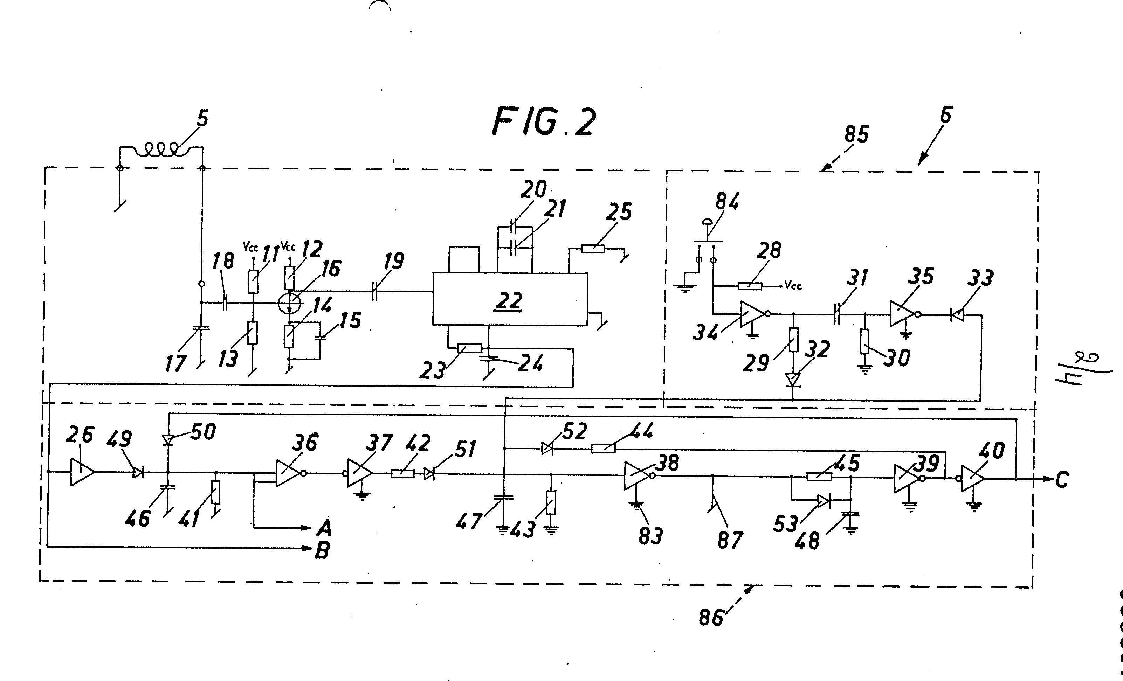

Figure 2 shows in more detail the detector 2 which includes
the coil 5 and the decoder 6. The coil 5 comprises of a
winding of copper wire and is arranged to detect
electromagnetical fields whos changes causes potential
differences at the connections of the coil 5. These are
detected by an amplifier composed of four resistors 11-14, one capacitor 15 and a transistor 16. The amplified, and through the capacitors 18, 19 filtered, signal is supplied to a PLL-circuit, e.g. a Phase-Locked-Loop-circuit. The capacitor 17 and the coil 5 constitute a resonans circuit which descriminates signals with high frequences. The value of the components determines the upper cut-off frequency.

The PLL-circuit 22 is arranged in a usual manner to act as a frequence discriminator and neglect all signals with a frequence which is not the desired or predetermined. Through an adequate dimension of the capacitors 20, 21 and the resistor 25 a desired lower cut off frequence is obtained. When a signal with accurate frequence appear at the input of the PLL-circuit 22 the PLL-circuit 22 emit a signal at the output starting a predetermined course of events in the decoder 6. The decoder 6 comprices moreover of a Start-Stop-Circuit 85 and a controle-unit 86.

A resistor 23 and a capacitor 24 is connected to the output of the PLL-Circuit 22. A conductor is from there connected to the amplifier 26 which constitute a part of the signal of the control-unit 86. The control-unit 86 is also provided with a capacitor 46 and a resistor 41 which secure enough process time to the clock-oscillator.

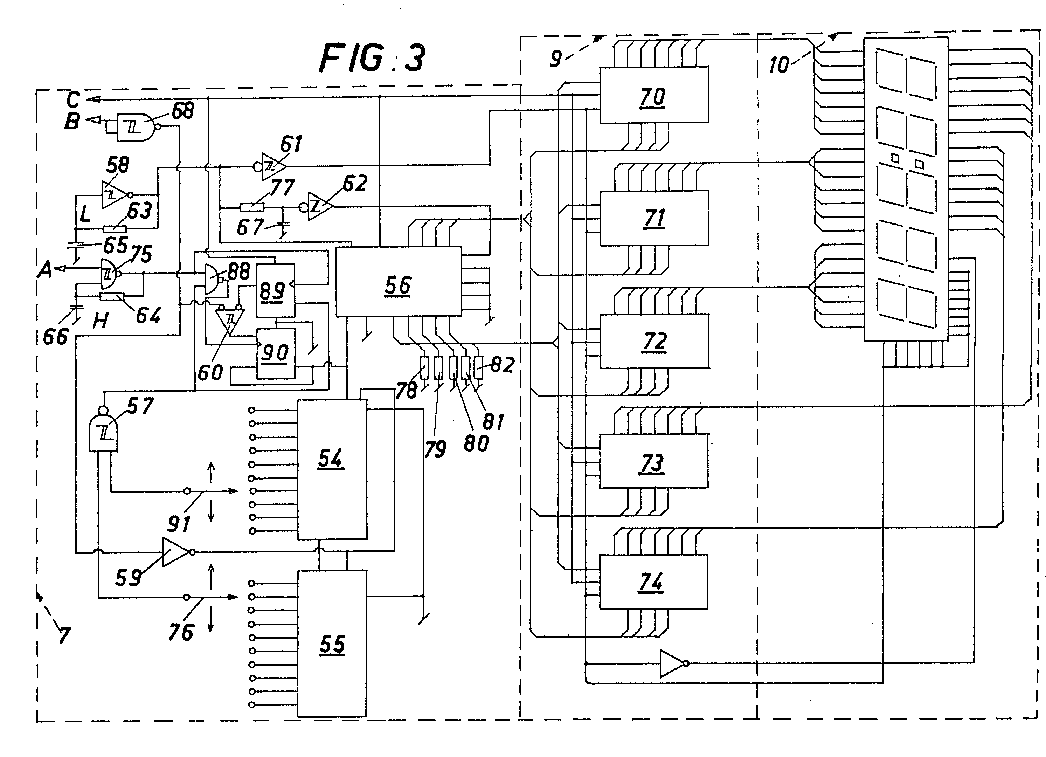

An operating device arranged in the start-stop-circuit 85 consists of a switch 84, and is with one pole connected to ground and with its other pole connected to an inverter 34 and a resistor 28. The start-stop-circuit 85 comprises mainly of three resistors 28-30, one capacitor 31, two diodes 32, 33 and two inverters 34, 35. The start-stop-circuit 85 is also connected to the control-unit 86 whos function is to control the parts of the debiting call meter and set the accumulator to zero. This control-unit 86 consists mainly of five inverters 36-40, five resistors 41-45, three capacitors 46-48, five diodes 49-53 and an amplifier 26. The control unit 86 is provided with three out-puts through which the electronic circuits shown in figure 3 are controlled. At the output A a signal is transmitted which starts a clock pulse-generator 64, 66, 75 (fig. 3), output B transmits a signal at every charge pulse and output C transmits a signal which connects voltage and sets the electronic circuits to zero. The technique to use two separate "ground systems", one first ground system 87, in the figures indicated as a slanting line and a second ground system 88 indicated with the conventional triangular ground sign, results in that the circuits need very little current. This because of that the first ground system 87 not is connected until the operating device 84 is actuated, e.g. during a telephone call in progress and short time after detecting the last charge pulse. This means that the cost of the telephone call could be read up to a couple of minutes after a call has been completed.

The calculator 7 shown in figure 3 comprises mainly of integrated circuits of CMOS-type in the same manner as the electronic circuits shown in figure 2. The integrated circuits (1C) comprises of two binary counters 54, 55 one decade counter including an accumulator 56, four NAND-gates 57, 68, 75, 88, four inverting Schmitt-triggers 58-62, eight resistors 63, 64, 77-82, three capacitors 65-67 and two flip-flops 89, 90.

The output of the detector 6 is connected to a NAND-gate 68. The signal is fed to both binary-counters 54, 55 and decade-counter/accumulator 56 via the Schmitt-trigger 60 and the flip-flop 90.

The Schmitt-trigger 58, the resistor 63 and the capacitor 65 constitute a scann-oscillator for pulsing the indicator 10. Its output signal is supplied to the decoder/driver-circuits 70-74. A clock pulse-oscillator comprising of the NAND-gate 75, the resistor 64 and the capacitor 66 generate a signal which is supplied to the decade counter 56 and the binary counters 54, 55 via the flip-flops 89, 90.

Two alteration switches 76,91 for example of thumb wheels-type, are on the one hand connected to the binary counters 54, 55 and on the other hand to the NAND-gate 57. By means of these alteration switches 76,91 it is possible to pre-set present cost per charge period expressed in monetary units, such as "Skr".

The calculator 7 is, as earlier mentioned, also connected to a driver 9 comprising of five IC's 70-74 arranged to drive the indicator 10. Each of these, so called BCD-to-seven-segment-decoders, are arranged to intermediate store the digit information, transform this to seven-segment-code and supply enough power to all the display-segment of the indicator 10.

The indicator 10 comprises of a liquied crystal display, with a capacity of five digits and a colon located between the third and fourth digits.

### Functional description

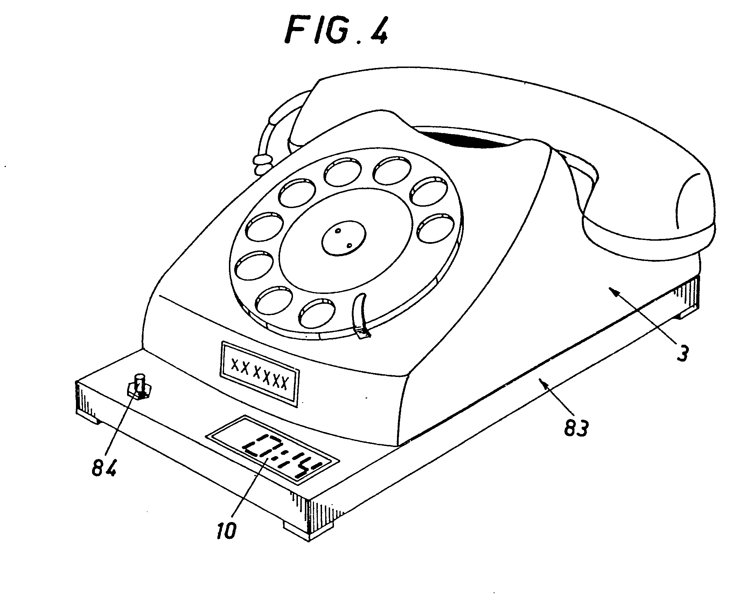

The debiting call meter is preferably built-in in a protective casing 83 (fig. 4). The casing 83 is preferably made by plastic or another workable material and has a substantially rectangular shape with the indicator 10 located on the front so that it can be easily read. A control member 84 is arranged easily accessible close to the indicator 10. The telephone set 3 is placed on the casing 83.

The alteration switches 76,91 (not shown in Fig. 4) intended for adjusting the charge per marking is preferably arranged accessible beneath or on the side part of the casing 83. These alteration switches 76,91 can be adjusted to a number between 1-99, which indicates the charge per marking in the monetary unit e.g. Swedish "öre". Thus the maximum charge which can be set is 0,99 Skr per marking. A push button for switching on the debiting call meter 1 and the indicator 10 can preferably be arranged on the front side close to the indicator 10.

Another design of the casing 83 is of course possible, e.g. a separate casing or a casing intended to be mounted on the wall. In such cases a flexible inductor is needed, which can be placed close to the telephone set or the conductors of the telephone net-work.

When a subscriber is to use the telephone and lifts the receiver a current starts to flow in both conductors of the telephone net work. By pushing the control member 84 the voltage is coupled to the electronic circuitry and the accumulator 56 for the call charge is set to zero. When the call has been established in the telephone station charge pulses are transferred to the telephone from which the call is made provided that a by-pass equipment intended for this purpose is arranged in the telephone station. When the charge pulses reaches the telephone set of the calling subscriber they are sensed by the detector 6. The detector 6 then delivers a signal, which i.a. is delivered to the binary calculators 54, 55. The pulse train with a frequency of about 100 Hz generated by the clock pulse generator is delivered to the binary counters 54, 55 and to the decade counter/accumulator 56, which counts and adds up each pulse. When the number of pulses preset on the alteration switches 76,91 has been counted in the binary counters 54, 55 and in the decade counter/accumulator 56 the counting is interrupted both in the binary counters 54, 55 and in the decade counter/accumulator 56.

The number of pulses which have been let in in the decade counter/accumulator 56 is electronically read and transferred to the resp. decoder/driver circuit 70-74 in the driver circuit 9. The information which in this way is delivered to each detector 70-74 is transformed to a seven segment code and transferred to the indicator 10 by a per se known multiplex method. The subscriber can thus continuosly read the accumulated cost of the call in monetary units e.g. Skr. on the digital displays arranged in the indicator 10.

The present invention is of course not restricted to the embodiment described above but a plurality of alternative embodiments are possible within the scope of the claims. Such an alternative embodiment of the debiting call meter would e.g. be arranging the electronic circuitry thereof within a telephone set, at which the indicator could be arranged under the dial of the telephone or at the side of the telephone set. It is also possible to arrange a further accumulator for storing the accumulated cost of all telephone calls.

0033573

## Claims

1. An electronic telephone call debiting meter (1), mainly intended for subscriber's telephone sets (3), and of the kind comprising a detector (2) for detecting charge pulses supplied from the telephone station, and a calculation and presentation unit (4) for calculating and presentating the telephone call cost;
characterized by
that the debiting meter (1) is arranged to inductively detect charge pulses supplied on the telephone network, that the calculation/presentation unit (4) is arranged to accumulate, on an alteration switch (76,91) pre-set cost value to a decade counter/accumulator (56) for each charge pulse and that a driver (9) is arranged to detect the contents of the decade counter/accumulator (56), transform it to digit code and transfer the digit code to the indicator (10) at which the indicator (10) is arranged to indicate the accumulated cost of the telephone call in monetary units.

## FIG.1

FIG.2

FIG.3

3/4

# FIG.4

X X X X X X

3

83

84

10

0033573

European Patent Office

**EUROPEAN SEARCH REPORT**

Application number

EP 81200110.5

| Category | Citation of document with indication, where appropriate, of relevant passages | Relevant to claim |
|---|---|---|
| | **DOCUMENTS CONSIDERED TO BE RELEVANT** | |
| P | <u>DE - A1 - 2 833 519</u> (WOBBERMIN) (21-02-1980) | 1 |
| | -- | |
| P | <u>FR - A1 - 2 432 250</u> (BARBIER) (22-02-1980) | 1 |
| | -- | |
| | <u>CH - A - 598 725</u> (AUTELCA) & DE-A1-2 741 611 & FR-A1-2 365 254 | 1 |
| | -- | |
| | <u>CH - A - 607 491</u> (SODECO-SAIA) | 1 |
| | -- | |
| | <u>CH - A - 574 194</u> (WASAGCHEMIE) + Fig. 1-3; columns 1-4 + & DE-B1-2 417 793 & AT-B - 343 187 & DD-A - 117 151 | 1 |
| | -- | |
| A | <u>CH - A - 561 992</u> (WASAGCHEMIE) + Fig. 1; column 1, line 64 - column 3, line 28 + & DE-B1-2 247 833 & AT-B-338 882 & AT-B - 329 643 & DD-A-105 964 | 1 |
| | -- | |
| A | <u>FR - A1 - 2 427 016</u> (HEDIN) + Fig. 4A,B; claims + | 1 |
| | -- | |
| A | <u>DE - A1 - 2 518 063</u> (FRITSCHER) + Fig. 1; pages 8-13 + | 1 |
| | ---- | |

**CLASSIFICATION OF THE APPLICATION (Int. Cl.³)**

H 04 M 15/28

**TECHNICAL FIELDS SEARCHED (Int. Cl.³)**

H 04 M 15/00
H 04 M 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 03-04-1981 | KUTZELNIGG |

EPO Form 1503.1   06.78